Europäisches Patentamt

European Patent Office

Office européen des brevets

(11) Numéro de publication : **0 088 021 B2**

(19)

(12) # NOUVEAU FASCICULE DE BREVET EUROPEEN

(45) Date de publication du nouveau fascicule du brevet : **25.09.91 Bulletin 91/39**

(51) Int. Cl.$^5$ : **B23K 26/08**

(21) Numéro de dépôt : **83400398.0**

(22) Date de dépôt : **25.02.83**

(54) Procédé et dispositif pour la réalisation par soudage laser par impulsions d'éléments de structure de réacteurs nucléaires et grilles en alliage de zirconium obtenues par ce procédé.

(30) Priorité : **03.03.82 FR 8203521**

(43) Date de publication de la demande :
**07.09.83 Bulletin 83/36**

(45) Mention de la délivrance du brevet :
**28.05.86 Bulletin 86/22**

(45) Mention de la décision concernant l'opposition :
**25.09.91 Bulletin 91/39**

(84) Etats contractants désignés :
**BE DE FR GB IT NL**

(56) Documents cités :
**CH-A- 444 335
LU-A- 65 315
US-A- 4 125 755
US-A- 4 162 390**

(73) Titulaire : **COMMISSARIAT A L'ENERGIE ATOMIQUE Etablissement de Caractère Scientifique Technique et Industriel
31/33, rue de la Fédération
F-75015 Paris (FR)**

(72) Inventeur : **Chastanet, Bernard
18 rue de la Fontaine
F-91790 Boissy-Sous-Saint Yon (FR)**
Inventeur : **Decailloz, Claude
1 Résidence Villebon Villebon-Sur-Yvette
F-91120 Palaiseau (FR)**
Inventeur : **Dournel, Solange
7 rue Y. Saint Hilaire
F-91000 Evry (FR)**
Inventeur : **Manson, Marcel
4 rue du Pommeret
F-78320 Le-Mesnil-Saint Denis (FR)**

(74) Mandataire : **Mongrédien, André et al
c/o BREVATOME 25, rue de Ponthieu
F-75008 Paris (FR)**

EP 0 088 021 B2

## Description

La présente invention a pour objet un procédé et un dispositif pour la réalisation par soudage laser par impulsions d'éléments de structure de réacteurs nucléaires comme les grilles d'espacement par exemple, et plus généralement l'application d'une telle méthode à la réalisation de dispositifs comportant des pièces minces et de petites dimensions devant être soudées entre elles.

Afin d'éviter les vibrations latérales des crayons combustibles dans les réacteurs nucléaires, on dispose de place en place le long des assemblages des dispositifs appelés « grilles d'espacement » ou « grilles de mélange ». Celles-ci se composent d'un ensemble de plaques minces se coupant deux à deux et définissant ainsi un certain nombre de casiers dans lesquels sont maintenus les crayons. Le liquide de refroidissement circule entre ces plaques et les crayons et on peut équiper les grilles avec des ailettes, dites « ailettes de mélange », dont le plan forme un angle avec celui des plaques minces afin de dévier les courants liquides et d'homogénéiser le liquide de refroidissement. Les dimensions des grilles de mélange sont généralements très petites (épaisseur des plaques de l'ordre de quelques dixièmes de millimètre et dimensions des casiers de l'ordre de 10 à 20 mm).

A l'heure actuelle, les grilles de mélange sont le plus souvent réalisées en Inconel, alliage facile à assembler par brasage, mais ce métal présente l'inconvénient d'absorber fortement les neutrons et de relâcher dans le circuit primaire des produits d'activation à vie longue comme le cobalt 60. C'est pourquoi on s'est tourné vers d'autres alliages et plus particulièrement les alliages de zirconium tels que le Zircaloy 4: ces derniers résistent bien à la corrosion par l'eau mais sont beaucoup plus difficiles à souder que l'Inconel et c'est pourquoi on ne les a pas utilisés jusqu'à ce jour pour cette application.

En effet, les plaques en Zircalloy étant plus minces que les plaques en Inconel, une soudure par brasage est difficilement envisageable. De plus, les grilles étant de petites dimensions, on se heurte à des problèmes de positionnement si on utilise des torches et on risque un échauffement important du métal: ceci peut entraîner des déformations des plaques et l'oxydation de celles-ci.

La dernière étape consiste à fixer les plaques de ceinture 9 entre elles pour réaliser la ceinture de maintien externe de la grille. Les plaques 9 sont assemblées bord à bord par un cordon de soudure 13 réalisé au laser, toujours par points et avec recouvrement afin d'obtenir également une soudure continue.

Le faisceau laser est disposé à l'extérieur de l'enceinte afin de réduire le volume et l'encombrement de cette dernière.

Eventuellement, si cela est plus commode, on peut inverser les étapes du procédé et réaliser la fixation des croisillons après avoir soudé les plaques 2 et 4 aux plaques de ceinture et après avoir soudé ces dernières entre elles.

On obtient ainsi une grille ayant des qualités mécaniques suffisantes pour être utilisées comme grille d'espacement dans les réacteurs nucléaires. Cependant, si l'on désire obtenir une résistance accrue, on a intérêt à effectuer une soudure des croisillons le long des intersections des plaques, cette soudure pouvant être effectuée sur toute la longueur de l'intersection ou sur une partie seulement de cette dernière. Dans ce cas, la soudure de chaque croisillon 6 se fait dans deux angles dièdres opposés, et dans ces deux angles seulement, parmi les quatre que définit l'intersection des plaques 2 et 4. De plus, les soudures sont faites de manière alternée, c'est-à-dire qu'on réalise le long de chaque plaque 2 ou 4 successivement deux soudures sur une face, puis deux soudures sur l'autre face, et ainsi de suite jusqu'à l'extrémité de la plaque. En d'autres termes, le plan bissecteur des deux dièdres où l'on effectue les soudures d'un croisillon est perpendiculaire au plan bissecteur des dièdres correspondant aux soudures du croisillon suivant le long d'une plaque donnée. Ceci permet de compenser les déformations dues au retrait de soudage et de réaliser un assemblage de grande précision. Les essais qui ont été réalisés ont montré que, dans l'exemple particulier décrit ici où les plaques se coupent à angle droit, on obtenait les meilleurs résultats en disposant le faisceau laser, symbolisé par la flèche F2, dans le plan P bissecteur.

Le document LU-A-65 315 décrit un procédé de fabrication de grilles consistant à amener un ensemble de fils parallèles dans une installation où ils sont soudés les uns aux autres puis écartés afin que la grille prenne sa forme définitive. L'opération est effectuée dans une enceinte à l'intérieur de laquelle on a fait le vide et qui contient un canon à électrons ou un émetteur laser. Un tel procédé manque de souplesse par la nécessité d'avoir des dispositifs de maintien et de positionnement ainsi que le canon à électrons ou l'émetteur laser à l'intérieur de l'enceinte.

Par ailleurs, comme l'illustre notamment le document US-A-4 162 390 on connaît differentes techniques de soudage telles que le laser pulsé permettant, sous atmosphère contrôlée et avec ou sans enceinte de protection, de réaliser une soudure non oxydée.

La présente invention a justement pour but d'éviter les inconvénients mentionnés ci-dessus des procédés de fabrication traditionnels de grilles, grâce à un procédé de réalisation industrielle par soudage laser par impulsions d'une grille ou d'un élément de structure, et notamment d'une grille en alliage de zirconium, qui permet d'éliminer tout risque de déformation et d'oxydation tout en ayant une grande souplesse d'utilisation.

Selon l'invention, ce résultat est obtenu au moyen d'un procédé conforme à la revendication 1.

L'invention a également pour objet un dispositif pour la mise en oeuvre de ce procédé, ce dispositif étant conforme à la revendication 5.

L'invention apparaîtra mieux à la lecture de la description qui va suivre, donnée à titre d'exemple purement illustratif et nullement limitatif, en référence aux dessins annexés, dans lequels :

- la figure 1 est une vue schématique en perspective, partiellement éclatée, illustrant le principe général du procédé objet de l'invention ;
- la figure 2 est une vue schématique en perspective illustrant le séquentiel de soudage de la grille selon l'invention ;
- la figure 3 est une vue agrandie de la partie inférieure de la grille de la figure 2 ;
- la figure 4 est une vue schématique montrant comment on divise le faisceau laser à l'aide de miroirs afin de souder simultanément plusieurs plaques sur les plaques de ceinture ;
- la figure 5 est une vue schématique montrant comment on divise le faisceau laser à l'aide de miroirs afin de souder plusieurs croisillons simultanément ;
- la figure 6 est une vue schématique en coupe verticale d'une enceinte étanche qui peut être utilisée selon l'invention ; et
- la figure 7 est une vue de dessus partielle en coupe suivant la ligne VII-VII de la figure 6.

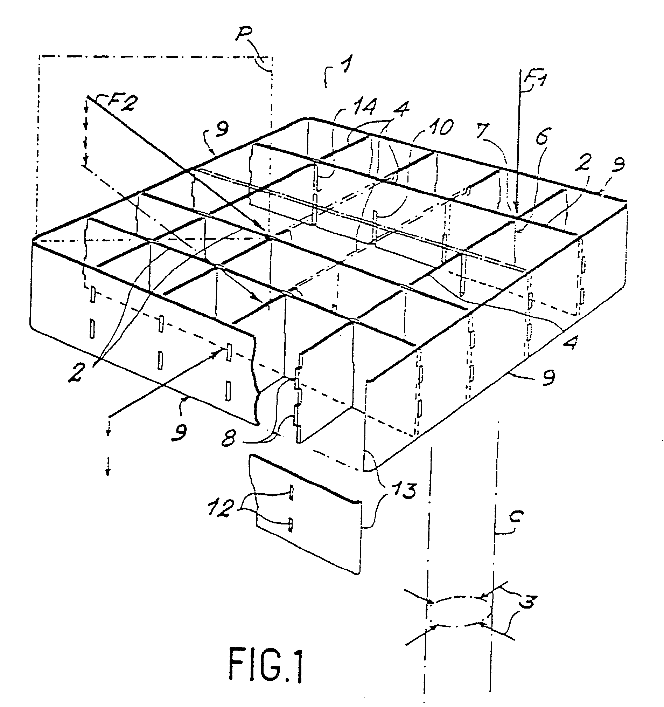

Sur la figure 1, on voit que la grille 1 se compose d'un ensemble de plaques telles que 2 et 4 se coupant à angle droit et définissant un certain nombre de croisillons 6. Sur la figure, on a représenté quatre plaques telles que 2 et quatre plaques telles que 4 constituant deux familles de plaques parallèles entre elles et perpendiculaires aux plaques de l'autre famille.

Le nombre de plaques représentées sur la figure a été réduit pour plus de clarté mais, en réalité, celles-ci sont beaucoup plus nombreuses. C'est ainsi qu'à titre d'essai, on a apliqué le procédé à la réalisation d'une grille en Zircaloy 4 avec deux familles de seize plaques ayant une épaisseur de 0,4 mm et formant des casiers ou cellules de 12,5x12,5 mm.

Chaque cellule reçoit un crayon combustible tel que le crayon C représenté schématiquement en traits mixtes sur la figure 1, celui-ci étant maintenu par la force exercée par quatre appuis prévus à l'intérieur de chaque casier (les flèches 3 symbolisent l'action de ces appuis). Ceux-ci se présentent généralement sous la forme de lamelles élastiques découpées dans les plaques 2 et 4. Bien entendu, des fentes telles que 10 et 14 sont prévues le long des plaques 2 et 4 respectivement afin qu'elles puissent s'imbriquer les unes dans les autres pour former les croisillons 6.

La grille 1 comprend également des plaques 9, dites "plaques de ceintures". Les extrémités des plaques 2 et 4 comprennent deux tenons 8 qui s'encastrent dans deux mortaises 12 prévues dans la plaque 9 correspondante, cette dernière comportant autant de groupes de deux mortaises 12 qu'il y a de plaques telles que 4 dans la grille.

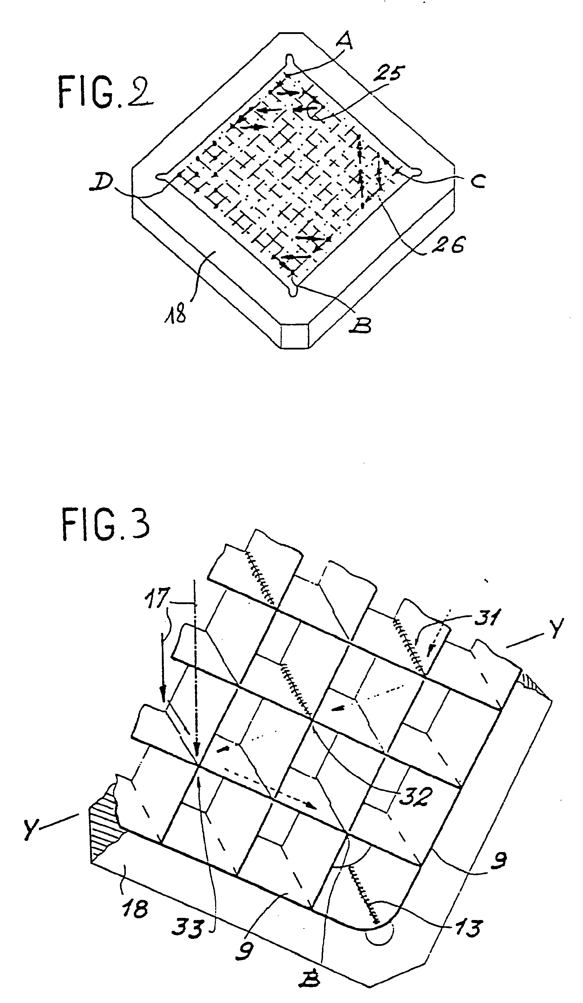

Les plaques 2, 4 et 9 préassemblées sont tout d'abord placées dans un cadre de maintien tel que 18 (figures 2 et 3).

La grille étant ensuite placée sous atmosphère contrôlée dans une enceinte étanche (non représentée sur la figure 1), l'étape suivante du procédé consiste à réaliser une fixation des croisillons 6 par un point de soudure à chacune de leurs extrémités 7, le faisceau laser, symbolisé par la flèche F1, étant placé suivant la ligne d'intersection des plaques 2 et 4.

L'étape suivante consiste à fixer les extrémités des plaques 2 et 4 sur les plaques de ceinture 9. La soudure des tenons 8 dans les mortaises 12 s'effectue toujours au laser, par points et avec recouvrements, afin de réaliser une soudure continue.

La dernière étape consiste à fixer les plaques de ceinture 9 entre elles pour réaliser la ceinture de maintien externe de la grille. Les plaques 9 sont assemblées bord à bord par un cordon de soudure 13 réalisé au laser, toujours par points et avec recouvrement afin d'obtenir également une soudure continue. de l'un des quatre dièdres formés par deux plaques 2 et 4 et de telle sorte qu'il fasse un angle de 45° avec la ligne d'intersection des plaques 2 et 4. Là encore, la soudure se fait par points avec recouvrement afin de réaliser une ligne de soudure continue. Il est très important de réaliser un soudage symétrique afin que les déformations se compensent : ceci est obtenu non seulement en plaçant le faisceau laser dans le plan bissecteur de chaque dièdre, mais aussi en réalisant la soudure dans deux angles dièdres opposés afin de créer des déformations en sens contraire qui s'annulent mutuellement. Quant à l'angle entre la direction du faisceau et la ligne d'intersection des plaques, sa valeur idéale est de 45° dans l'exemple décrit ici où les plaques définissent des casiers carrés de 12,5 mm de côté soudés sur une hauteur de 6 mm, mais l'homme de l'art pourra modifier cette valeur en fonction des dimensions de la grille. Toutefois, c'est avec un angle de 45° qu'on obtient les meilleurs résultats et on aura intérêt à choisir cette valeur chaque fois que ce sera possible. La grille 1 est montée sur un support mobile, ce qui permet de la déplacer pour effectuer les soudures successivements sur tous les croisillons 6. Lorsque toutes les soudures sont terminées, on enlève le cadre de maintien en alliage léger.

Etant donné que les grilles sont réalisées en alliage de zirconium, on les place dans une enceinte sous gaz neutre et munie de hublots ou parois transparentes à la longueur d'onde du faisceau laser, afin d'éviter toute oxydation au niveau des soudures. A cet effet, on utilise un laser à impulsions : l'énergie du faisceau est donc transmise de manière discontinue, ce qui limite l'échauffement des pièces et permet une soudure précise en diminuant considérablement les risques de déformation et d'oxydation.

Une illustration schématique du séquentiel de soudage est donnée par les figures 2 et 3.

On dispose la grille de sorte que le croisillon A se trouve sous le faisceau et on effectue la soudure dans l'un des angles dièdres de ce croisillon. Puis, on déplace la grille de sorte que le faisceau suive le trajet symbolisé par la ligne 25 en effectuant la soudure dans l'un des angles de chaque croisillon, et ainsi de suite jusqu'au croisillon B, en sautant éventuellement certains croisillons suivant la disposition finale désirée. Puis on tourne la grille d'un quart de tour pour que le croisillon C vienne à la place du croisillon B et on effectue une autre série de soudures en suivant la ligne 26 jusqu'au point D. Puis on retourne la grille et on fait la même chose sur l'autre face.

La figure 3 illustre la dernière partie du séquentiel de soudage correspondant à la ligne 25 lorsqu'on arrive au voisinage du croisillon B. On est en train d'effectuer la soudure dans un des angles dièdres du croisillon 33 après avoir fait la même chose aux croisillons 31 et 32. On arrivera ensuite au croisillon B. Les autres soudures se feront au cours des séquences suivantes après rotation ou retournement de la grille.

Bien entendu, il ne s'agit là que d'un exemple et d'autres séquentiels sont possibles en fonction de chaque cas particulier.

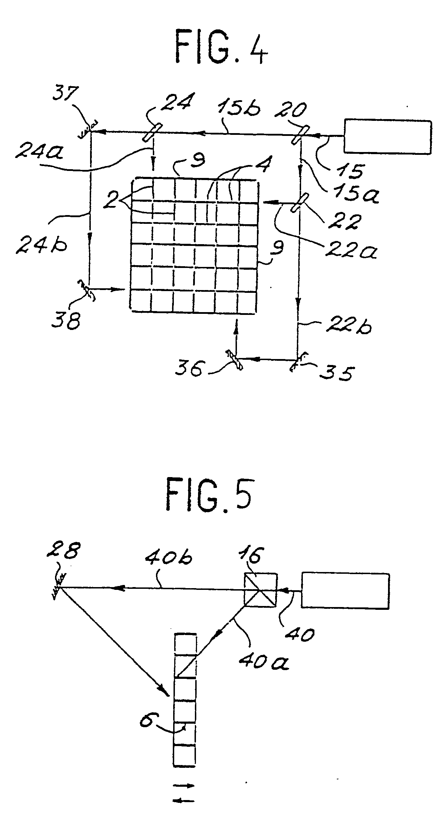

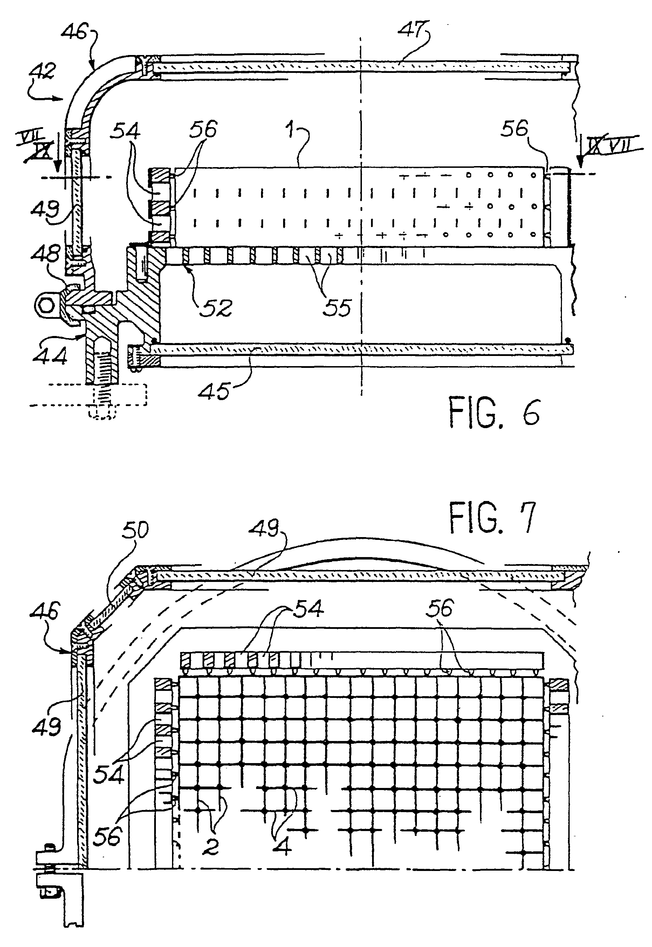

Les figures 4 et 5 illustrent schématiquement une autre caractéristique de ce procédé permettant de réaliser plusieurs soudures simultanément en divisant et en déviant le faisceau laser.

Sur la figure 4, on voit que le faisceau 15 rencontre un premier miroir semi-réfléchissant 20 incliné à 45° dont l'effet est de réfléchir une partie de l'énergie du faisceau 15 donnant un faisceau 15a perpendiculaire à ce dernier, et de transmettre un deuxième faisceau 15b. Le faisceau 15a rencontre un autre miroir semi-réfléchissant 22 dont l'effet est le même que celui du miroir 20. Le faisceau 15a se divise alors en un faisceau réfléchi 22a et un faisceau transmis 22b que deux miroirs à réflexion totale 35 et 36 renvoient sur l'intersection d'une plaque 2 avec une plaque de ceinture. De même, le miroir 24 divise le faisceau 15b en un faisceau réfléchi 24a et un faisceau transmis 24b que des miroirs à reflexion totale 37 et 38 renvoient sur une autre intersection d'une plaque 4 avec une plaque de ceinture. La disposition des miroirs est telle que les extrémités des faisceaux 22a, 22b, 24a et 24b soient chacune sur une face de la grille et disposées symétriquement, par exemple en face de la première intersection des plaques de ceinture avec les plaques 2 et 4 comme illustré sur la figure 6. Ceci permet, avec un seul faisceau laser, de réaliser quatre soudures simultanément et d'effectuer un soudage symétrique afin de limiter le plus possible les déformations. En déplaçant la grille, on effectue successivement toutes les soudures d'extrémité.

La figure 5 montre comment on peut réaliser la soudure des croisillons 4 à partir des deux faces de la grille après avoir fait pivoter celle-ci de sorte qu'elle se présente sur la tranche. Le faisceau 40 traverse d'abord un dispositif de réfraction 16 qui le divise en un faisceau réfracté 40a qui aboutit sur une face de la grille et un faisceau transmis 40b. Ce dernier est renvoyé sur l'autre face de la grille par un miroir à réflexion totale 28. La disposition de l'ensemble est telle que les faisceaux 40a et 40b fassent un angle de 45° avec les lignes d'intersection des plaques 2 et 4. On peut ainsi souder deux croisillons simultanément ou les deux moitiés d'un même croisillon, chacune avec l'un des deux faisceaux. Ceci permet encore de réaliser un soudage symétrique afin de réduire les déformations, en effectuant le soudage simultanément dans deux angles dièdres opposés d'un même croisillon.

L'homme de l'art pourra évidemment choisir le nombre et la disposition des miroirs afin de réaliser simultanément le plus grand nombre possible de soudures compte tenu de l'encombrement du dispositif et des pertes d'énergie chaque fois qu'un faisceau se divise au contact d'un miroir.

Les essais qui ont été réalisés ont permis d'obtenir des grilles en Zircaloy 4 ne présentant pas de déformations et où les cordons de soudure étaient exempts de toute pollution et de toute oxydation. Ces essais ont été réalisés avec un laser de longueur d'onde 1,06 µm dopé au néodyme et à impulsions relaxées.

Les figures 6 et 7 illustrent un mode particulier de réalisation de l'enceinte étanche dans le cas où l'on ne soude que les extrémités de chaque croisillon. On voit sur la figure 6 que l'enceinte, portant la référence générale 42, se compose d'une embase 44 reliée à un boîtier supérieur 46 par un dispositif de cerclage 48. L'embase 46 est équipée d'une vitre ou paroi transparente 45 tandis que le boîtier 46 comporte une vitre supérieure 47 et des vitres latérales 49. On voit sur la figure 9 que le boîtier 46 est de forme octogonale avec des parois transparentes 50 de petites dimensions disposées à 45° par rapport aux parois 49. Les parois 45 et 47 permettent la soudure des croisillons à leurs extrémités, les parois 49 la soudure des plaques 2 et 4 sur les plaques de ceinture 9 et les parois 50, la soudure des plaques d'extrémité entre elles, le faisceau laser étant toujours perpendiculaire à la paroi qu'il traverse.

On voit encore un cadre de maintien 52, solidaire de l'embase 44 et qui entoure la grille à souder 1 sur sa face inférieure et ses faces latérales. Des ouvertures 54 dans les parties latérales du cadre 52 permettent le passage du faisceau pour souder les plaques 2 et 4 sur les plaques de ceinture tandis que des ouvertures 55 dans la partie inférieure du cadre permettent de souder les extrémités inférieures des croisillons. Le maintien est assuré par des pions 56 qui s'appuient sur les plaques de ceinture entre les zones d'intersection de ces dernières avec les plaques 2 et 4.

Dans ce cas, c'est l'ensemble constitué par l'enceinte 42, le cadre 52 et la grille 1 qui se déplace devant le faisceau laser. Dans tous les cas où une soudure à chaque extrémité des croisillons suffit, on a intérêt à utiliser une enceinte comme celle représentée aux figures 6 et 7 pour les raisons suivantes :

– en raison de sa petite taille, il est plus facile de contrôler l'atmosphère qui y règne ;

– l'ensemble constitué par la grille et l'enceinte peut être manipulé facilement ;

– on peut effectuer le montage de la grille dans l'enceinte sans immobiliser le poste de soudage. Le fait d'utiliser plusieurs enceintes permet d'améliorer les cadences de fabrication sans augmenter notablement les frais d'installation puisque le coût des enceintes reste modéré du fait de leur petite taille.

Bien entendu, l'exemple qui vient d'être décrit n'est pas limitatif et l'homme de l'art pourra modifier certains détails de réalisation de l'enceinte.

Ainsi, le procédé selon l'invention présente des avantages particulièrement intéressants, puisqu'il permet de réaliser des grilles de mélange de réacteurs nucléaires en alliages de zirconium avec précision et sans risque de déformation des pièces. De plus, le fait de diviser le faisceau laser pour réaliser plusieurs points de soudure ou cordons de soudure simultanément augmente la rentabilité du processus et contribue à limiter les déformations en permettant de réaliser un soudage symétrique. Enfin, on peut prévoir l'automatisation du procédé grâce à la possibilité de diviser le faisceau et grâce à la précision mécanique des grilles qui facilite leur positionnement. Et dans les cas où l'on peut se contenter d'une soudure à chaque extrémité des croisillons, on peut encore améliorer la rentabilité du procédé en utilisant des enceintes commes celles qui sont illustrées aux figures 6 et 7.

Enfin, il est bien entendu que l'invention ne se limite pas aux seuls exemples de réalisation qui viennent d'être décrits mais qu'on peut envisager des variantes sans sortir pour autant du cadre de l'invention, notamment en ce qui concerne l'ordre dans lequel on effectue les différentes soudures et en ce qui concerne le mode de réalisation des enceintes étanches.

## Revendications

1. Procédé de réalisation d'une grille d'espacement d'un assemblage de crayons combustibles pour un réacteur nucléaire, cette grille (1) étant en alliage de zirconium et comportant des plaques minces (2, 4) qui se coupent mutuellement, définissant ainsi un certain nombre de croisillons (6), ainsi que des plaques de ceinture (9), caractérisé par le fait qu'on réalise cette grille :

a) en plaçant les plaques minces (2, 4) et les plaques de ceinture (9) préassemblées dans un cadre de maintien (18, 52) ;

b) en plaçant le cadre maintenant les plaques préassemblées dans une enceinte étanche (5) contenant une atmosphère contrôlée, comportant plusieurs parois (45, 47, 49, 50) transparentes à une longueur d'onde donnée, ces parois étant placées en regard des deux faces et des côtés de la grille ;

c) en réalisant un point de soudure aux deux extrémités de chaque croisillon, simultanément pour plusieurs croisillons, au moyen d'un laser à impulsions placé à l'extérieur de l'enceinte et émettant un faisceau de longueur d'onde égale à ladite longueur d'onde donnée, et de miroirs réfléchissant ce faisceau simultanément suivant plusieurs lignes d'intersection des plaques minces (2, 4), perpendiculairement aux parois (45, 47) placées en regard des faces de la grille.

d) en réalisant simultanément plusieurs soudures continues des extrémités des plaques minces (2, 4) sur les plaques de ceinture (9), au moyen dudit laser et de miroirs réfléchissant le faisceau simultanément dans le plan de plusieurs plaques minces, perpendiculairement aux parois (49) placées en regard des côtés de la grille ; et

e) en réalisant des soudures continues des extrémités des plaques de ceinture (9) entre elles, au moyen dudit laser, perpendiculairement à des parois (50) placées en regard des coins de la grille.

2. Procédé selon la revendication 1, caractérisé par le fait qu'il comprend de plus, après l'étape c), une étape consistant à réaliser simultanément sur plusieurs lignes d'intersection des plaques minces des soudures s'étendant sur une partie au moins de ces lignes, au moyen dudit laser et de miroirs réfléchissant le faisceau simultanément vers plusieurs lignes d'intersection, à environ 45° par rapport à ces lignes.

3. Procédé selon la revendication 2, caractérisé par le fait qu'on réalise les soudures suivant les lignes d'intersection des plaques dans deux angles dièdres opposés de chaque croisillon (6).

4. Procédé selon la revendication 3, caractérisé par le fait qu'on réalise les soudures suivant les lignes d'intersection des plaques en réalisant, sur chaque plaque, alternativement deux soudures d'un côté et de l'autre.

5. Dispositif pour la mise en oeuvre du procédé selon l'une quelconque des revendications 1 à 4, caractérisé par le fait qu'il comprend :

– une enceinte étanche (5) contenant une atmosphère contrôlée et comportant plusieurs parois (45, 47, 49, 50) transparentes à une longueur d'onde donnée,

– un cadre de maintien (18, 52) de la grille, placé à l'intérieur de l'enceinte, de telle sorte que les parois transparentes soient placées en regard des faces et des côtés de la grille ;

– un laser à impulsions placé à l'extérieur de l'enceinte et émettant un faisceau de longueur d'onde égale à ladite longueur d'onde donnée ;

– des miroirs aptes à recevoir et à dévier ce faisceau simultanément vers les intersections de plusieurs plaques de la grille, perpendiculairement aux parois transparentes.

## Claims

1. Process for producing a spacer grid of an assembly of fuel rods for a nuclear reactor, this grid (1) being made of zirconium alloy and comprising thin plates (2, 4) which intersect one another, thus defining a particular number of crosses (6), and surround plates (9), characterised in that this grid is produced:

a) by placing the thin plates (2, 4) and surround plates (9) preassembled in a retaining frame (18, 52);

b) placing the frame retaining the preassembled plates in a sealed containment (5) containing a controlled atmosphere and comprising a plurality of walls (45, 47, 49, 50) transparent to a given wavelength, these walls being placed opposite the two faces and the sides of the grid;

c) by making a welding spot at the two ends of each cross simultaneously for a plurality of crosses by means of a pulsed laser located outside the containment and emitting a beam of a wavelength equal to the said given wavelength, and by means of mirrors reflecting this beam simultaneously along a plurality of lines of intersection of the thin plates (2, 4), perpendicularly to the walls (45, 47) placed opposite the faces of the grid;

d) by simultaneously making a plurality of continuous welds of the ends of the thin plates (2, 4) to the surround plates (9) by means of the said laser and of mirrors reflecting the beam simultaneously in the plane of a plurality of thin plates perpendicularly to the walls (49) placed opposite the sides of the grid; and

e) by making continuous welds of the ends of the surround plates (9) to one another by means of the said laser perpendicularly to walls (50) placed opposite the corners of the grid.

2. Process according to Claim 1, characterised in that it comprises furthermore, after step c), a step involving simultaneously making on a plurality of lines of intersection of the thin plates welds extending over at least part of these lines by means of the said laser and of mirrors reflecting the beam simultaneously towards a plurality of lines of intersection at approximately 45° relative to these lines.

3. Process according to Claim 2, characterised in that the welds are made along the lines of intersection of the plates in two mutually opposite dihedral angles of each cross (6).

4. Process according to Claim 3, characterised in that the welds are made along the lines of intersection of the plates by alternately making two welds on each plate on one side and on the other.

5. Apparatus for carrying out the process according to any one of Claims 1 to 4, characterised in that it comprises:

– a sealed containment (5) containing a controlled atmosphere and comprising a plurality of walls (45, 47, 49, 50) transparent to a given wavelength,

– a grid-retaining frame (18, 52) arranged inside the containment in such a way that the transparent walls are placed opposite the faces and sides of the grid;

– a pulse laser placed outside the containment and emitting a beam of a wavelength equal to the said given wavelength;

– mirrors capable of receiving and deflecting this beam simultaneously towards the intersections of a plurality of plates of the grid perpendicularly to the transparent walls.

## Patentansprüche

1. Verfahren zur Herstellung eines Abstandsgitters einer Anordnung von Bremstäben für einen Kernreaktor, wobei das Gitter (1) aus einer Zirkoniumlegierung gebildet ist und dünne Platten (2,4), die sich gegenseitig schneiden, wobei sie so ein gewisse Anzahl von Kreuzungen (6) festlegen, sowie Einfassungsplatten (9) aufweist, dadurch gekennzeichnet, daß dieses Gitter dadurch hergestellt wird, daß:

a) die dünnen Platten (2,4) und die vormontierten Einfassungsplatten (9) in einen Halterahmen (18,52) plaziert werden;

b) der Halterahmen, der die vormontierten Platten in einer dichten Kammer (5) hält, die eine kontrollierte Atmosphäre enthält, mehrere Seitenwände (45,47,49,50) aufweist, die bei einer vorbestimmten Wellenlänge durchlässig sind, gesetzt wird, wobei die Seitenwände gegenüber den beiden Längs- und Querseiten des Gitters gesetzt werden;

c) ein Schweißpunkt an den Enden einer jeden Kreuzug gleichzeitig für mehrere Kreuzungen erzeugt wird mittels eines Impulslasers, der außerhalb des Raumes angeordnet ist, und ein Bündel mit einer Wellenlänge emittiert, die gleich der vorgegebenen Wellenlänge ist, und mittels Spiegeln, die dieses Bündel gleichzeitig gemäß mehrerer Schnittlinien der dünnen Platten (2,4), senkrecht zu den Seitenwänden (45,47), die gegenüber den Längsseiten des Gitters angeordnet sind, reflektieren;

d) kontinuierliche Schweißungen der Enden der dünnen Platten (2,4) auf den Einfassungsplatten (9) mittels des Lasers und der Spiegel, die das Bündel gleichzeitig in die Ebene von mehreren dünnen Platten reflektieren, senkrecht zu den Seitenwänden (49), die gegenüber den Querseiten des Gitters angeordnet sind, gleichzeitig erzeugt werden; und

e) kontinuierliche Schweißungen der Enden der Einfassungsplatten (9) untereinander mittels des Lasers, senkrecht zu den Seitenwänden (50), die gegenüber den Gitterecken angeordnet sind, erzeugt werden.

2. Verfahren nach Anspruch 1, dadurch gekennzeichnet, daß es weiterhin, nach dem Verfahrensschritt c), einen Verfahrensschritt aufweist, der darin besteht, gleichzeitig auf mehreren Schnittlinien der dünnen Platten Schweißungen, die sich wenigstens auf einem Teil dieser Linien erstrecken, mittels des Lasers und der Spiegel, die das Bündel gleichzeitig in mehrere Schnittlinien reflektiert bei ungefähr 45° bezüglich dieser Linien, zu erzeugen.

3. Verfahren nach Anspruch 2, dadurch gekennzeichnet, daß die Schweißungen entlang der Schnittlinien der Platten in zwei Zweiflachwinkeln erzeugt werden, die jeder Kreuzung (6) gegenüberliegen.

4. Verfahren nach Anspruch 2, dadurch gekennzeichnet, daß die Schweißungen entlang der Schnittlinien der Platten erzeugt werden, unter Erzeugung auf jeder Platte abwechselnd von zwei Schweißungen auf der einen und der anderen Seite.

5. Vorrichtung zur Durchführung des Verfahrens nach einem der Ansprüche 1 bis 4, dadurch gekennzeichnet, daß sie aufweist:

– eine dichte Kammer (5), die eine gesteuerte Atmosphäre enthält und mehrere Seitenwände (45,47,49,50) aufweist, die bei einer vorgegebenen Wellenlänge durchslässig sind,

– einen Halterahmen (18,52) des Gitters, der im Inneren des Raums angeordnet ist, derart, daß die durchlässigen Seitenwände gegenüber den Längs- und den Querseiten des Gitters angeordnet sind;

– einen Impulslaser, der außerhalb des Raumes angeordnet ist und ein Bündel von einer Wellenlänge emittiert, die gleich der vorgegebenen Wellenlänge ist; und

– Spiegel, die geeignet sind, das Bündel aufzunehmen und es in Richtung der Schnittpunkte von mehreren Platten des Gitters, senkrecht zu den durchlässigen Seitenwänden, abzulenken.

FIG.1

FIG.2

FIG.3

# FIG. 4

# FIG. 5

FIG. 6

FIG. 7